# EUROPEAN PATENT APPLICATION

(11) **EP 2 589 884 A2**
(43) Date of publication of application: **08.05.2013**
(21) Application number: 12179790.6
(22) Date of filing: 09.08.2012
(51) Int. Cl.: F24D 11/02, F24D 19/00, F24D 19/10

(54) **Heat pump hot water apparatus**

(30) Priority: 26.08.2011 JP 2011184632
(71) Applicant: Panasonic Corporation, Osaka 571-8501 (JP)
(72) Inventor: Fukunaga, Toshikatsu, Chuo-ku, OSAKA, 540-6207 (JP); Aoyama, Shigeo, Chuo-ku, OSAKA, 540-6207 (JP); Isayama, Yasuhiko, Chuo-ku, OSAKA, 540-6207 (JP)
(74) Representative: Eisenführ, Speiser & Partner

(57) **Abstract**

According to a heat pump hot water apparatus of the invention, the hot water tank 7 is disposed on one side of the casing 50, the antifreeze liquid circulating means 41 and the heat pump circuit are disposed on the other side of the casing 50, and the water/refrigerant heat exchanger 2 is disposed at a location higher than the compressor 1. According to this configuration, the heat pump circuit and the hot water tank circuit are accommodated in one casing 50, stability and noise-reduction effect can be realized when the heat pump hot water apparatus is installed, and the casing 50 can be made smaller in size by enhancing layout balance of functional parts in the casing 50.

## Description

### [Technical Field]

The present invention relates to a heat pump hot water apparatus which heats a room with hot water produces by using a heat pump circuit which utilizes earth thermal.

### [Background Technique]

Most of conventional heaters use fuel of a combustion system such as petroleum and gas as a heat source but in recent years, heating market using a heat pump technique is rapidly growing. Conventional air conditioners can also both cool and heat a room utilizing the heat pump technique.
However, the conventional air conditioner has a problem that it is difficult to warm feet at the time of a heating operation and to solve this problem, hot water apparatuses utilizing the heat pump technique have been developed (patent document 1).
According to the hot water apparatus described in patent document 1, heat is exchanged between high temperature refrigerant and hot water, and hot water which is heated by the heat exchange is sent to a heating terminal such as a floor heating panel, thereby heating a room.
A heat pump hot water supply apparatus in which utilizes earth thermal has been already proposed (patent document 2).

### [Prior Art Documents]

### [Patent Document]

[Patent Document 11 Japanese Patent Application Laid-open No.2008-39305
[Patent Document 2] Japanese Patent Application Laid-open No.2007-64540

### [Summary of the Invention]

### [Problem to be Solved by the Invention]

According to the heat pump hot water apparatus of the patent document 1, a hot water supply heat exchanger is vertically provided in a hot water tank, and since hot water for hot water supply is produced using hot water which is to be sent to a heating terminal, a temperature of the entire hot water in the hot water tank is decreased. As a result, a temperature of hot water to be sent to the heating terminal is decreased and comfort at the heating terminal is deteriorated.

A heat pump water heater which utilizes earth thermal is generally installed indoors in Europe and the like, and if a depth dimension of the water heater as a product is 600 mm or less, installation performance is excellent. According to patent document 2, however, a water heater body unit in which a heat pump cycle is accommodated and a tank unit in which a hot water tank is accommodated are separate units, and patent document 2 has a problem that an installation area is increased.

The present invention has been accomplished to solve the conventional problem, and it is an object of the invention to provide a heat pump hot water apparatus in which a heat pump circuit and a hot water tank circuit are accommodated in one casing and which stability and noise-reduction effect can be realized when the heat pump hot water apparatus is installed, and the casing can be made smaller in size by enhancing layout balance of functional parts in the casing.

### [Means for Solving the Problem]

To solve the conventional problem, according to a heat pump hot water apparatus of the invention,the hot water tank is disposed on one of sides of the casing, the antifreeze liquid circulating means and the heat pump circuit are disposed on the other side of the casing, and the water/refrigerant heat exchanger is disposed at a location higher than the compressor. According to the invention, a heavy compressor which largely vibrates is disposed on a bottom plate, and a water/refrigerant heat exchanger is disposed above the compressor. According to this configuration, stability and noise-reduction effect can be realized when the heat pump hot water apparatus is installed, and the casing can be made smaller in size by enhancing layout balance of functional parts in the casing.

### [Effect of the Invention]

According to the invention, the heat pump circuit and the hot water tank circuit can be accommodated in one casing. According to this configuration, stability and noise-reduction effect can be realized when the heat pump hot water apparatus is installed, and the casing can be made smaller in size by enhancing layout balance of functional parts in the casing.

### [Brief Description of the Drawings]

Fig. 1 is a block diagram of a heat pump hot water apparatus according to an embodiment of the present invention; and
Fig. 2 is a diagram showing a schematic configuration of an essential portion of an interior of the heater as viewed from a front surface of a casing of the embodiment.

### [Explanation of Symbols]

- 1: compressor
- 2: water/refrigerant heat exchanger
- 3: decompressor
- 4: antifreeze liquid refrigerant heat exchanger
- 5: four-way valve
- 6: refrigerant pipe
- 7: hot water tank
- 8: partition plate
- 9: water circulating means
- 10: water outlet
- 11: hot water port
- 12a, 12b: temperature sensor
- 13: flow switch
- 14: over pressure relief valve
- 15a: upper heater
- 15b: lower heater
- 16a, 16b, 16c, 16d: temperature sensor
- 17: hot water supply terminal
- 18: hot water supply heat exchanger
- 19: hot water supply pump
- 20: hot water-outflow port
- 21: water-inflow port
- 22: flow rate adjusting valve
- 23: check valve
- 24: over pressure relief valve
- 25: waste plug
- 26: water supply pipe
- 27: three-way valve
- 28: over pressure relief valve
- 29: over pressure relief valve
- 30: hot water supply pipe
- 31: temperature sensor
- 32: auxiliary temperature sensor
- 33: flow rate sensor
- 34: heating terminal
- 35: heating pump
- 36: hot water take-out port
- 37: first expansion tank
- 41: antifreeze liquid circulating means
- 42: earth thermal heat exchanger
- 44: second expansion tank
- 50: casing

### [Mode for Carrying Out the Invention]

According to a heat pump hot water apparatus of a first aspect of the invention, the hot water tank is disposed on one of sides of the casing, the antifreeze liquid circulating means and the heat pump circuit are disposed on the other side of the casing, and the water/refrigerant heat exchanger is disposed at a location higher than the compressor. According to this aspect, a heavy compressor which largely vibrates is disposed on a bottom plate, and a water/refrigerant heat exchanger is disposed above the compressor. According to this configuration, stability and noise-reduction effect can be realized when the heat pump hot water apparatus is installed, and the casing can be made smaller in size by enhancing layout balance of functional parts in the casing.

According to a second aspect of the invention, in the heat pump hot water apparatus of the first aspect, the water/refrigerant heat exchanger and the antifreeze liquid refrigerant heat exchangerare disposed at locations higher than the compressor and the antifreeze liquid circulating means. According to this aspect, a heavy compressor and an antifreeze liquid circulating means which largely vibrate are disposed on a bottom plate, and a water/refrigerant heat exchanger and an antifreeze liquid refrigerant heat exchanger are disposed above the compressor and the antifreeze liquid circulating means. According to this configuration, stability and noise-reduction effect can be realized when a product is installed, and a body can be made smaller in size by enhancing layout balance of functional parts in the casing.

According to a third aspect of the invention, in the heat pump hot water apparatus of the first or second aspect, the first expansion tank is disposed at a location higher than the hot water tank. According to this aspect, it is possible to increase an adaptable water amount in a first expansion tank with respect to an amount of water in a boiling circuit which circulates through a water/refrigerant heat exchanger and a hot water tank.

According to a fourth aspect of the invention, in the heat pump hot water apparatus of the thridaspect, a hermetic second expansion tank connected to the antifreeze liquid circuit,wherein the second expansion tank is disposed at a location higher than the antifreeze liquid refrigerant heat exchanger. According to this aspect, it is possible to increase an adaptable antifreeze liquid amount in a second expansion tank with respect to an antifreeze liquid amount in an antifreeze liquid circuit.

According to a fifth aspect of the invention, in the heat pump hot water apparatus of the fourth aspect, the first expansion tank is disposed on the one side of the casing, and the second expansion tank is disposed on the other side of the casing. According to this aspect, the body can be made smaller in size by enhancing layout balance of functional parts in the casing.
Embodiments of the present invention will be explained below with reference to the drawings. The invention is not limited to the embodiments.

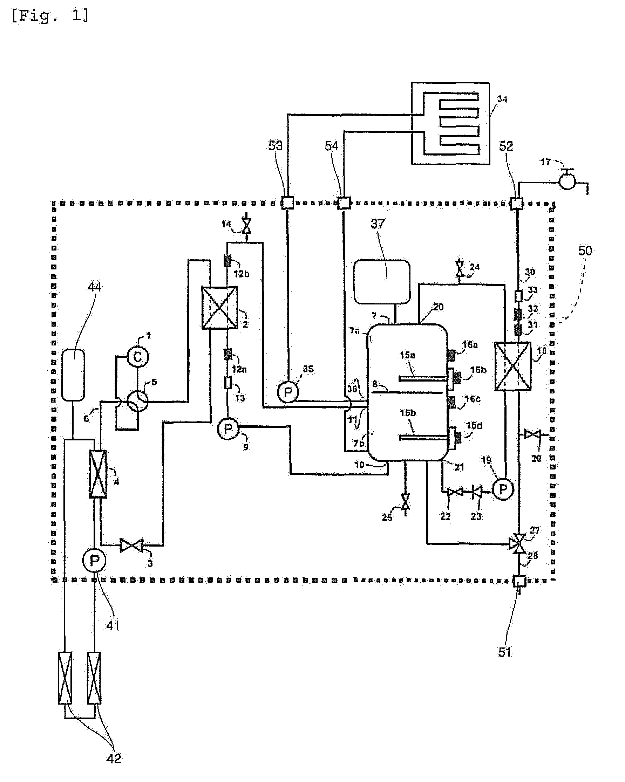

First, a configuration a heat pump hot water apparatus of the embodiment will be explained. Fig. 1 is a block diagram of the heat pump hot water apparatus of the embodiment of the invention. The heat pump hot water apparatus of the embodiment includes a heat pump circuit, a hot water tank circuit and anantifreeze liquid circuit. The heat pump circuit, a boiling circuit in the hot water tank circuit and an antifreeze liquid circulating means (pump) 41 which configures an antifreeze liquid circuit are accommodated in one casing 50, and the casing 50 is disposed out of doors.
The heat pump circuit includes a compressor 1 which compresses and discharge a e refrigerant, a water/refrigerant heat exchanger 2 which absorbs heat from the refrigerant discharged from the compressor 1 to produce hot water, a decompressor 3 which decompresses a refrigerant which dissipates heat in the water/refrigerant heat exchanger 2, an antifreeze liquid refrigerant heat exchanger 4 which absorbs heat from the antifreeze liquid by the refrigerant decompressed by the decompressor 3, and a four-way valve 5 which changes flow paths of a refrigerant. The compressor 1, the water/refrigerant heat exchanger 2, the decompressor 3, the antifreeze liquid refrigerant heat exchanger 4 and the four-way valve 5 are annularly connected to one another through a refrigerant pipe 6, thereby forming a heat pump circuit. As the water/refrigerant heat exchanger 2 and the antifreeze liquid refrigerant heat exchanger 4, a high efficient plate type heat exchanger is used. In the heat pump circuit, R410A is used as a refrigerant, but chlorofluorocarbons-based refrigerant of R407C is more suitable.

An antifreeze liquid circuit includs antifreeze liquid circulating means 41 which makes antifreeze liquid circulate, and an earth thermal heat exchanger 42 which absorbs earth thermal by the antifreeze liquid. A hermetic second expansion tank 44 is connected to the antifreeze liquid circuit. An interior of the second expansion tank 44 is divided by a diaphragm into an antifreeze liquid chamber and an air chamber, and capacities of the antifreeze liquid chamber and the air chamber are changed by the diaphragm. Therefore, the second expansion tank 44 can absorb expansion of the antifreeze liquid in the antifreeze liquid circuit. It is preferable that the second expansion tank 44 is connected to an upper portion of an antifreeze liquid refrigerant heat exchanger 4.

The hot water tank circuit includes a hot water tank 7 in which hot/cold water is stored. A partition plate 8 is disposed in the hot water tank 7 at a substantially intermediate portion thereof in a height direction of the hot water tank 7. In the hot water tank 7, an upper space which is higher than the partition plate 8 is a hot water supply-hot water section 7a, and a lower space which is lower than the partition plate 8 is a heating hot water section 7b. By partitioning the interior of the hot water tank 7 into the upper space and the lower space, hot water in the hot water supply-hot water section 7a can be used for heat exchange when hot water is supplied, and hot water in the heating hot water section 7b can be used for circulating to the heating terminal when a room is heated.

A water outlet 10 is provided in a lower portion of the hot water tank 7. A water pipe through which low temperature water is sent from the water outlet 10 to the water/refrigerant heat exchanger 2 is provided with water circulating means (pump) 9. By driving the water circulating means 9, low temperature water is sent from the water outlet 10 to the water/refrigerant heat exchanger 2, the water/refrigerant heat exchanger 2 absorbs heat from the refrigerant and hot water is produced.
Hot water produced by the water/refrigerant heat exchanger 2 is returned to a hot water inlet 11 provided in an upper portion of the heating hot water section 7b. In this embodiment, the hot water tank 7 the water outlet 10, the water circulating means 9, the water/refrigerant heat exchanger 2 and the hot water inlet 11 are connected to one another through a water pipe, thereby forming a boiling circuit. An AC pump having a constant circulation flow rate is used as the water circulating means 9.

The partition plate 8 has a plurality of openings, when hot water heated by the heat pump circuit returns to the heating hot water section 7b, the hot water flows into the hot water supply-hot water section 7a through the openings.
A periphery of the partition plate 8 and an inner wall of the hot water tank 7 are welded to each other through a plurality of welding points, and gaps are provided between the periphery of the partition plate 8 and the hot water tank 7 other than the welding points. Hot water which returned from the hot water inlet 11 flows into the hot water supply-hot water section 7a through the gaps formed between the periphery of the partition plate 8 and the hot water tank 7.

Stainless steel is used for the hot water tank 7 and the partition plate 8 in view of corrosion resistance.
A temperature sensor 12a which detects an inflow-water temperature is provided at a water-side inlet of the water/refrigerant heat exchanger 2, and a temperature sensor 12b which detects an outflow-water temperature is provided at a water-side outlet of the water/refrigerant heat exchanger 2. A flow switch 13 is provided for detecting that hot/cold water flows through the boiling circuit.
The water circulating means 9, the flow switch 13 and an over pressure relief valve 14 are provided in upstream and downstream pipes of the water/refrigerant heat exchanger 2. The flow switch 13 detects flow of hot/cold water. The flow switch 13 is disposed downstream of the water circulating means 9. Since the flow switch 13 is disposed downstream of the water circulating means 9, it is possible to detect that the water circulating means 9 is not normally operated.

The over pressure relief valve 14 which adjusts a pressure in the boiling circuit is provided above the water circulating means 9. If an abnormal condition is encountered in the boiling circuit and an internal pressure rises and becomes higher than a set pressure of the over pressure relief valve 14, expanded hot/cold water can be discharged from the over pressure relief valve 14.
An upper heater 15a is disposed in the hot water supply-hot water section 7a, and a lower heater 15b is disposed in the heating hot water section 7b. The upper heater 15a is used for heating hot water in the hot water supply-hot water section 7a, and the lower heater 15b is used for heating hot water in the heating hot water section 7b.
Temperature sensors 16a, 16b, 16c and 16d are disposed on a side wall of the hot water tank 7 for detecting a temperature of hot/cold water in the hot water tank 7. The temperature sensor 16a is disposed above the upper heater 15a, and the temperature sensor 16b is disposed at substantially the same height as the upper heater 15a. The temperature sensor 16c is disposed at a location lower than the partition plate 8 and higher than the lower heater 15b, and the temperature sensor 16d is disposed at substantially the same height as the lower heater 15b.

The hot water tank circuit is provided with a hot water supply heat exchanger 18 which produces hot water to be sent to a hot water supply terminal 17. High temperature water in the hot water tank 7 is sent to a primary-side flow path of the hot water supply heat exchanger 18, and low temperature water is sent from a water supply source to a secondary-side flow path of the hot water supply heat exchanger 18.
A hot water supply pump 19 is provided in a water pipe through which high temperature water in the hot water tank 7 is sent to the hot water supply heat exchanger 18. A hot water-outflow port 20 is provided in an upper portion of the hot water supply-hot water section 7a of the hot water tank 7, and a water-inflow port 21 is provided in a lower portion of the heating hot water section 7b of the hot water tank 7. By driving the hot water supply pump 19, high temperature water is sent from the hot water-outflow port 20 to a primary-side flow path of the hot water supply heat exchanger 18.
Hot water after heat is exchanged by the hot water supply heat exchanger 18 is returned from the water-inflow port 21 into the hot water tank 7. In this embodiment, the hot water tank 7, the hot water-outflow port 20, the hot water supply heat exchanger 18, the hot water supply pump 19 and the water-inflow port 21 are connected to one another through the water pipe to form a hot water supply circuit. An AC pump whose circulation flow rate is constant is used as the hot water supply pump 19.

A water pipe between the hot water supply pump 19 and the water-inflow port 21 is provided with a check valve 23 and a flow rate adjusting valve 22 which adjusts a circulation flow rate of hot/cold water in the boiling circuit. The check valve 23 is provided to prevent convection of hot/cold water in the hot water supply circuit. This is because when the hot water supply pump 19 is not driven, the check valve 23 prevents high temperature water in an upper portion of the hot water tank 7 from entering a lower portion of the hot water tank 7 through the hot water supply heat exchanger 18. If the high temperature water flows into the lower portion of the hot water tank 7, a temperature of hot water which is sent to the water/refrigerant heat exchanger 2 becomes high and boiling efficiency is deteriorated.
In this embodiment, by providing the check valve 23, only when a flow rate becomes equal to a predetermined load or higher, hot/cold water is circulated through the hot water supply circuit in a normal direction. In the embodiment, only when a load of 20 g is applied in the normal direction of the check valve 23, hot/cold water flows in the normal direction. The value of the load is not limited to 20 g.

An over pressure relief valve 24 which adjusts a pressure in the hot water supply circuit is provided in a water pipe extending from the hot water-outflow port 20 to the hot water supply heat exchanger 18. If the pressure in the hot water supply circuit becomes higher than a set pressure of the over pressure relief valve 24, hot/cold water is discharged from the over pressure relief valve 24. The hot water tank 7 is provided at its lower portion with a water plug 25, and hot/cold water in the hot water tank 7 can be discharged outside.
A water line extending from the water supply source is connected to a water supply pipe 26 through an intake connection port 51. The water supply pipe 26 is connected to a bottom of the hot water tank 7 and a secondary-side flow path of the hot water supply heat exchanger 18 through a three-way valve 27.
When the hot water tank circuit is installed, the three-way valve 27 is switched to a flow path which is connected to the hot water tank 7, the tank 7 is filled with water, and after the hot water tank 7 becomes full of water, the three-way valve 27 is switched to a flow path which is connected to the hot water supply heat exchanger 18. After water is supplied to the hot water tank 7, if the three-way valve 27 is switched to the flow path connected to the hot water supply heat exchanger 18 in this manner, a water circuit including the hot water tank 7 is closed, new water does not enter, and even if a user is living in an area of hard water having a high mineral content, scale is deposited only from water which is put into the hot water tank 7 for the first time.

A water pipe between the three-way valve 27 and the hot water supply heat exchanger 18 is provided with an over pressure relief valve 29. A water supply pressure is applied from the water supply source directly to the hot water supply heat exchanger 18. Hence, when the water supply pressure is high, if water is supplied from the water supply source directly to the hot water supply heat exchanger 18, there is a possibility that the hot water supply heat exchanger 18 is destroyed and breaks down. Hence, the over pressure relief valve 29 is provided and when hot/cold water of more than given water supply pressure enters, water is discharged outside through the over pressure relief valve 29 to prevent the hot water supply heat exchanger 18 from breaking down.
If a temperature of low temperature water supplied from the water supply source rises in the hot water supply heat exchanger 18, the low temperature water is supplied to the hot water supply terminal 17 through a hot water supply pipe 30. The hot water supply terminal 17 is connected to the hot water supply pipe 30 through a take-out connection port 52. The hot water supply pipe 30 includes a temperature sensor 31 and an auxiliary temperature sensor 32 which are hot water supply temperature detecting means for detecting a temperature of hot/cold water. The hot water supply pipe 30 also includes flow rate sensor 33 which is flow rate detecting means for detecting a flow rate.

The heat pump hot water apparatus includes a heating terminal 34 for heating a room and it is possible to heat the room by circulating hot water in the hot water tank 7 through the heating terminal 34. The heating terminal 34 is connected to the hot water tank 7 through a hot water outflow port 53 and a hot water inflow port 54. The heating pump 35 sends hot water from the heating hot water section 7b of the hot water tank 7 to the heating terminal 34 through the hot water outflow port 53, and the hot water is returned from the heating terminal 34 to the heating hot water section 7b of the hot water tank 7 through the hot water inflow port 54. Hot water sent to the heating terminal 34 is taken out from a hot water take-out port 36 provided in the vicinity of the hot water inlet 11, and hot water in the heating hot water section 7b is supplied to the heating terminal 34. Hot water after it is heat-exchanged in the heating terminal 34 is returned to the bottom of the hot water tank 7. An AC pump having a constant circulation flow rate is used as the heating pump 35.
A hermetic first expansion tank 37 is connected to the hot water tank 7. An interior of the first expansion tank 37 is separated into a water chamber and an air chamber by a diaphragm, and capacities of the water chamber and the air chamber are changed by the diaphragm. Therefore, the first expansion tank 37 can absorb expansion of water in the circulation path which configures the hot water tank circuit. The first expansion tank 37 may be connected to a pipe extending from the heating pump 35 to the hot water outflow port 53 or a pipe extending from the hot water inflow port 54 to the hot water tank 7, but it is preferable that the first expansion tank 37 is connected to an upper portion of the hot water tank 7.

An operation of the heat pump hot water apparatus will be explained below.
First, a boiling operation will be explained. First, a boiling temperature Th of hot/cold water in the water/refrigerant heat exchanger 2 is set. If the boiling operation is started, the water circulating means 9 is driven and hot water in the hot water tank 7 is supplied to the water/refrigerant heat exchanger 2. The boiling operation carried out by the heat pump circuit is continued until a temperature detected by the temperature sensor 12b exceeds the boiling temperature Th. When hot water in the hot water tank 7 is to be boiled by the heat pump circuit, the four-way valve 5 is switched such that high temperature refrigerant discharged from the compressor 1 flows into the water/refrigerant heat exchanger 2.
As a result, high temperature refrigerant discharged from the compressor 1 flows into the water/refrigerant heat exchanger 2, thereby dissipating heat to hot/cold water and high temperature water can be produced. In the water/refrigerant heat exchanger 2, water and a refrigerant flow in a counterflowing manner so that the heat exchanging efficiency is enhanced.
If a temperature of hot/cold water coming from the water/refrigerant heat exchanger 2 detected by the temperature sensor 12b approaches the boiling temperature Th, the revolution number of the compressor 1 is reduced to lower the ability. If the temperature detected by the temperature sensor 12b becomes higher than the boiling temperature Th by a predetermined temperature Ta (e.g., 2°C), the operation of the compressor 1 is stopped and the boiling operation is completed. The hot water tank 7 is full of hot/cold water of the boiling temperature Th.
High temperature water produced by the water/refrigerant heat exchanger 2 is returned to the heating hot water section 7b, and the hot water supply-hot water section 7a is also full of hot/cold water of the boiling temperature Th through the gaps between the periphery of the partition plate 8 and the hot water tank 7. At that time, an inflow-water temperature Ti detected by the temperature sensor 12a when the operation of the compressor 1 is stopped is stored.

Also after the boiling operation carried out by the heat pump circuit is completed, the water circulating means 9 is driven and hot water in the hot water tank 7 is circulated through the water/refrigerant heat exchanger 2. This is because that it is necessary to detect a temperature of hot water in the hot water tank 7 by the temperature sensor 12a and the temperature sensor 12b even while the boiling operation is stopped, and the boiling operation carried out by the heat pump circuit must be restarted immediately when the temperature of heat exchanger in the hot water tank 7 is lowered.
The water circulating means 9 is driven even while the hot water supply operation is stopped, hot water in the hot water tank 7 is always detected by the temperature sensor 12a, and when a temperature detected by the temperature sensor 12b becomes lower than the inflow-water temperature Ti stored when the operation of the compressor 1 is stopped by a predetermined temperature Tb (e.g., 5°C), the operation of the compressor 1 is restarted, and the boiling operation is started.
If the boiling temperature Th is set to 55°C for example, the operation of the compressor 1 is stopped when a temperature detected by the temperature sensor 12b exceeds 57°C (=55°C+2°C). If the temperature detected by the temperature sensor 12a when the operation of the compressor 1 is stopped is 53°C, the fact that the inflow-water temperature Ti is 53°C is stored. The water circulating means 9 is driven even after the operation of the compressor 1 is stopped, and when a temperature detected by the temperature sensor 12b becomes lower than the inflow-water temperature Ti only by a predetermined temperature Tb (e.g., 5°C), the operation of the compressor 1 is restarted. The predetermined temperatures Ta and Tb shown in the embodiment are one example, and the invention is not limited to the embodiment.

In the hot water tank circuit, a boiling temperature Tu of the upper heater 15a, a boiling temperature Tbo of the lower heater 15b and a hot water supply temperature Tk to the hot water supply terminal 17 can be set.
In the embodiment, by setting the boiling temperature Tu of the upper heater 15a to a temperature higher than the boiling temperature Th, hot water in the hot water supply-hot water section 7a can be boiled to the boiling temperature Tu. If the boiling temperature Th is set to 55°C and the boiling temperature Tu is set to 75°C for example, the boiling operation is carried out such that water is boiled to the boiling temperature Th (55°C) by the water/refrigerant heat exchanger 2 and it is boiled to 75°C by the upper heater 15a.
Since it is possible to set different boiling temperatures in the upper space and the lower space between the partition plate 8, water can be boiled to an optimal temperature in accordance with respective terminals, and usability can be enhanced.

Next, a boiling operation carried out by the upper heater 15a will be explained. When the operation of the upper heater 15a is to be started, output of the upper heater 15a is turned ON when a temperature detected by a temperature sensor 16a provided at a location higher than the upper heater 15a becomes lower than the boiling temperature Tu by a predetermined temperature Tc (e.g., 5°C). Hot water in the hot water supply-hot water section 7a is heated by the upper heater 15a, and the output of the upper heater 15a is turned OFF when a temperature detected by a temperature sensor 16b provided at the same location as the upper heater 15a becomes higher than the boiling temperature Tu by a predetermined temperature Td (e.g., 2°C).
As described above, the temperature sensor 16a which determines when the upper heater 15a is turned ON and the temperature sensor 16b which determines when the upper heater 15a is turned OFF are made different from each other so that the upper heater 15a is not frequently switched between ON and OFF, and the durability of the upper heater 15a is enhanced. The predetermined temperatures Tc and Td shown in the embodiment are one example, and the invention is not limited to the embodiment.

Next, a boiling operation carried out by the lower heater 15b will be explained. The lower heater 15b is turned ON when the boiling operation can not be carried out by a heat pump unit A, thereby preventing a temperature of hot water in the heating hot water section 7b from decreasing.
If the heating operation is continued for example, frost forms on the antifreeze liquid refrigerant heat exchanger 4 and a defrosting operation must be carried out. In such a case, a refrigerant flow path is switched by the four-way valve 5, thereby flowing high temperature refrigerant coming from the compressor 1 into the antifreeze liquid refrigerant heat exchanger 4, and the defrosting operation is carried out at a temperature of the refrigerant.
However, when the defrosting operation is carried out, the refrigerant can not dissipate heat by the water/refrigerant heat exchanger 2, hot water can not be produced by the water/refrigerant heat exchanger 2. As a result, a temperature of hot water in the heating hot water section 7b is decreased and this decreases a temperature of hot water to be supplied to the heating terminal 34 . To prevent this, the lower heater 15b is turned ON, thereby preventing the temperature of hot water in the heating hot water section 7b from decreasing and comfort at the heating terminal 34 can be maintained. Not only during the defrosting operation but also when the heat pump unit A breaks down, it is possible to heat hot water in the heating hot water section 7b by the lower heater 15b.

In this embodiment, control is performed such that only when a temperature detected by the temperature sensor 16d is lower than a boiling temperature Tbo by the predetermined temperature Te (e.g., 10°C), the lower heater 15b is turned ON.
As a result, when the boiling temperature Tbo is set equal to the boiling temperature Th, water is boiled to the boiling temperature Th by the heat pump circuit in the heating hot water section 7b, and the lower heater 15b is not turned ON unless a temperature detected by the temperature sensor 16d is lower than the boiling temperature Tbo by the predetermined temperature Te.
When the defrosting operation of the antifreeze liquid refrigerant heat exchanger 4 is carried out or when ability of the heat pump circuit is not exerted, the lower heater 15b can be turned ON only when the temperature detected by the temperature sensor 16d is lower than the boiling temperature Tbo by the predetermined temperature Te, and extremely efficient boiling operation can be carried out.
When the boiling operation is carried out by the lower heater 15b, if the lower heater 15b is to be stopped, the boiling operation is carried out such that the lower heater 15b is turned ON when the temperature detected by the temperature sensor 16d is higher than the boiling temperature Tbo by a predetermined temperature Tf (e.g., 2°C).

As described above, both the boiling operation carried out by the heat pump circuit and boiling operation carried out by the lower heater 15b in combination are used in combination, even in a state where the boiling operation is not carried out by the heat pump unit A due to defrosting operation of the antifreeze liquid refrigerant heat exchanger 4, hot water in the heating hot water section 7b is maintained at the boiling temperature Tbo, the hot water can stably be sent to the heating terminal 34, and comfort is not deteriorated. The predetermined temperatures Te and Tf shown in the embodiment are one example, and the invention is not limited to the embodiment.

Next, a heating operation will be explained. If the heating operation is started, the heating pump 35 is driven and hot water in the heating hot water section 7b is supplied to the heating terminal 34. Hot water which dissipated heat in the heating terminal 34 is returned to the lower portion in the hot water tank 7. At that time, since AC pump is used as the heating pump 35, hot/cold water of a given flow rate is circulated at the time of the heating operation.

Next, a hot water supply operation will be explained. A hot water supply set temperature Tk is set. If hot/cold water comes from the hot water supply terminal 17 and the flow rate sensor 33 detects that a flow rate becomes a predetermined flow rate or higher, the hot water supply pump 19 is driven and high temperature water in the hot water supply-hot water section 7a is sent to the hot water supply heat exchanger 18.
An opening degree of the flow rate adjusting valve 22 is adjusted in accordance with a temperature deviation between the temperature T1 detected by the temperature sensor 31 and the hot water supply set temperature Tk, and feedback control is performed such that the temperature T1 detected by the temperature sensor 31 becomes equal to the hot water supply set temperature Tk. Hot water after it dissipated heat in the hot water supply heat exchanger 18 is returned to the lower portion of the heating hot water section 7b.
A temperature layer is created in the heating hot water section 7b and this layer has such properties that that a higher location has a higher temperature. Therefore, even if hot water after it dissipated heat in the hot water supply heat exchanger 18 is returned to the lower portion of the heating hot water section 7b, influence on a temperature of hot water to be sent to the heating terminal 34 is small.
Since high temperature water in the hot water supply-hot water section 7a is used as hot water to be sent to the hot water supply heat exchanger 18, and high temperature water in the heating hot water section 7b is used as hot water to be sent to the heating terminal 34, it is possible to suppress influence of hot water supply operation received by the hot water to be sent to the heating terminal 34.
When the flow rate sensor 33 does not detect a flow of hot/cold water, if it is detected that a hot water temperature T1 detected by the temperature sensor 31 is higher than a hot water supply abnormal temperature Tj (e.g., 65°C) or higher, it is determined that an abnormal condition is encountered, the operation of the hot water supply pump 19 is stopped, the opening degree of the flow rate adjusting valve 22 is fully closed to reliably prevent high temperature water in the hot water tank 7 from being sent to the hot water supply heat exchanger 18. This can prevent high temperature water in the hot water tank 7 from being used uselessly, and prevent the hot water tank 7 from drying up. The predetermined temperature Tj shown in the embodiment is one example, and the invention is not limited to the embodiment.

The heat pump hot water apparatus of the embodiment is provided with the auxiliary temperature sensor 32. This prevents high temperature water from coming from the hot water supply terminal 17. Next, detection of abnormal condition carried out by the auxiliary temperature sensor 32 at the time of the hot water supply operation will be explained.
First, when the hot water supply operation is being carried out, a temperature of hot water supplied to the hot water supply terminal 17 in the auxiliary temperature sensor 32 is detected, a temperature deviation between a temperature T1 detected by the temperature sensor 31 and a temperature T2 detected by the auxiliary temperature sensor 32 is detected.
If it is detected that the temperature T2 is higher than the temperature T1 by a predetermined temperature Tg (e.g., 8°C), there is a possibility that the temperature sensor 31 is erroneously operated and high temperature water is supplied to the hot water supply terminal 17. Therefore, the operation of the hot water supply pump 19 is stopped and the opening degree of the flow rate adjusting valve 22 is fully closed. As a result, high temperature water does not come out from the hot water supply terminal 17 and safety can be secured. The predetermined temperature Tg shown in the embodiment is one example, and the invention is not limited to the embodiment.

Next, control of the flow rate adjusting valve 22 at the time of the hot water supply operation will be explained.
First, if hot/cold water is supplied from the hot water supply terminal 17, the flow rate sensor 33 detects that a flow rate becomes higher than a predetermined flow rate. If the flow rate sensor 33 detects that the flow rate becomes higher than the predetermined flow rate, operation of the hot water supply pump 19 is started.
If predetermined time a (e.g., 8 seconds) is elapsed after the operation of the hot water supply pump 19 is started, operation of the flow rate adjusting valve 22 is started and the opening degree of the flow rate adjusting valve 22 is adjusted such that the temperature T1 detected by the temperature sensor 31 becomes equal to the hot water supply set temperature Tk. The opening degree of the flow rate adjusting valve 22 is maintained at a predetermined opening degree during the predetermined time α.
By delaying the time to start the operation of the flow rate adjusting valve 22 by the predetermined time α after the operation of the hot water supply pump 19 is started, it is possible to prevent a temperature of hot/cold water supplied to the hot water supply terminal 17 from hunting.
If the hot water supply operation is not carried out for a long time after the last time hot water supply operation is completed, the hot water supply heat exchanger 18 is cooled. Therefore, a flow rate of hot water sent from the hot water tank 7 to the hot water supply heat exchanger 18 is maintained constant until a temperature of the hot water supply heat exchanger 18 is stabilized after the hot water supply operation is started, thereby preventing the temperature of hot water supplied to the hot water supply terminal 17 from hunting.

Next, an opening degree of the flow rate adjusting valve 22 during the hot water supply operation will be explained. The flow rate adjusting valve 22 during a normal hot water supply operation is controlled based on the temperature T1 detected by the temperature sensor 31. By setting the hot water supply set temperature Tk, the opening degree of the flow rate adjusting valve 22 is adjusted such that a temperature detected by the temperature sensor 31 becomes equal to the hot water supply set temperature Tk.
However, if a flow rate of hot/cold water sent from the water supply source to the hot water supply heat exchanger 18 is changed by operating the hot water supply terminal 17, a balance between high temperature water sent from the hot water tank 7 to the hot water supply heat exchanger 18 and low temperature water sent from the water supply source to the hot water supply heat exchanger 18 is lost, and hunting of a temperature of hot/cold water supplied to the hot water supply terminal 17 occurs.
Hence, in the embodiment, the opening degree of the flow rate adjusting valve 22 is determined in accordance with variation in the flow rate of hot/cold water detected by the flow rate sensor 33.

First, if hot/cold water comes out from the hot water supply terminal 17, the opening degree of the flow rate adjusting valve 22 is adjusted such that the temperature T1 detected by the temperature sensor 31 becomes equal to the hot water supply set temperature Tk. Then, the hot water supply terminal 17 is operated and if a flow rate detected by the flow rate sensor 33 is varied, a heat balance at the hot water supply heat exchanger 18 is lost.
Hence, several seconds are required until the temperature T1 detected by the temperature sensor 31 is varied after the flow rate of hot/cold water supplied to the hot water supply terminal 17 is varied, and if the opening degree of the flow rate adjusting valve 22 is controlled based on the temperature T1 detected by the temperature sensor 31, vertical hunting of the temperature of hot/cold water supplied to the hot water supply terminal 17 occurs.
Hence, in this embodiment, a flow rate Qa before predetermined time La is always stored, and a current flow rate Qo and the flow rate Qa before the predetermined time La are compared with each other. As a result of comparison between the flow rates, if the flow rate is increased more than a flow rate Qd, the opening degree of the flow rate adjusting valve 22 is driven to a target opening degree Pt irrespective of a value of the temperature T1 detected by the temperature sensor 31.
The target opening degree Pt is determined in accordance with the current flow rate Qo, the flow rate Qa before the predetermined time La and a current opening Pn of the flow rate adjusting valve 22. At that time, a fact that the current flow rate Qo is increased greater than the flow rate Qa before the predetermined time La means that an amount of hot/cold water to be supplied to the hot water supply terminal 17 is increased and thus, it is necessary to further supply high temperature water from the hot water tank 7 to the hot water supply heat exchanger 18. Therefore, the target opening degree Pt is increased more than the current opening Pn.

Next, the current flow rate Qo and the flow rate Qa before the predetermined time La are compared with each other, and if the flow rate is reduced more than the flow rate Qd, the opening degree of the flow rate adjusting valve 22 is driven to the target opening degree Pt irrespective of a value of the temperature T1 detected by the temperature sensor 31.
The target opening degree Pt is determined in accordance with the current flow rate Qo, the flow rate Qa before the predetermined time La and the current opening Pn of the flow rate adjusting valve 22. At that time, a fact that the current flow rate Qo is reduced larger than the flow rate Qa before the predetermined time La means that the amount of hot/cold water to be supplied to the hot water supply terminal 17 is reduced and thus, it is necessary to reduce the high temperature water to be supplied from the hot water tank 7 to the hot water supply heat exchanger 18. Therefore, the target opening degree Pt is closed more than the current opening Pn.
As described above, when a flow rate of hot/cold water to be supplied to the hot water supply terminal 17 is largely varied, the opening degree of the flow rate adjusting valve 22 is controlled to the target opening degree Pt irrespective of a value of the temperature T1 detected by the temperature sensor 31. According to this, it is possible to prevent a temperature of hot/cold water to be supplied to the hot water supply terminal 17 from hunting.

Even if the opening degree is varied from the current opening Pn to the target opening degree Pt, the temperature T1 detected by the temperature sensor 31 is largely overshot in some cases. Hence, in this embodiment, when the temperature T1 detected by the temperature sensor 31 is higher than the hot water supply set temperature Tk by a predetermined temperature Ty (e.g., 3°C) or more, the opening degree of the flow rate adjusting valve 22 is reduced by a predetermined opening degree D.
This predetermined opening degree D is made different between a case where the current flow rate Qo detected by the flow rate sensor 33 is large and a case where the current flow rate Qo detected by the flow rate sensor 33 is small. That is, it is determined whether the current flow rate Qo is greater than a predetermined flow rate Qb (e.g., 5L/min), and if the current flow rate Qo is greater than the predetermined flow rate Qb, the opening degree of the flow rate adjusting valve 22 is reduced by a predetermined opening degree Da, and if the current flow rate Qo is smaller than the predetermined flow rate Qb, the opening degree of the flow rate adjusting valve 22 is further reduced by a predetermined opening degree Db. At that time, there is a relation that the predetermined opening degree Da is larger than the predetermined opening degree Db (Da>Db).

A variation amount of a flow rate when the opening degree of the flow rate adjusting valve 22 is small and a variation amount of a flow rate when the opening degree of the flow rate adjusting valve 22 is large are different from each other. For example, a point Ma of a certain opening degree Pa which is a large flow rate is to be reduced by a flow rate Qx, it is necessary to reduce the opening degree to a point Mb which is an opening degree Pb, but if attempt is made to reduce a point Mc of an opening degree Pc which is a small flow rate by the flow rate Qx, it is only necessary to reduce the opening degree to a point Md which is the opening degree Pd. That is, it can be found that as the flow rate is greater, the flow rate is not reduced unless the opening degree is reduced largely. Hence, in this embodiment, the predetermined opening degree Da is set larger than the predetermined opening degree Db (Da>Db), and as the current flow rate Qo is greater, the opening degree is reduced largely.
Since the flow rate adjusting valve 22 has such properties that as the opening degree is smaller, the flow rate is varied largely. Hence, control is performed such that a driving speed when the opening degree of the flow rate adjusting valve 22 is reduced by the predetermined opening degree Da is faster than a driving speed when the opening degree of the flow rate adjusting valve 22 is reduced by the predetermined opening degree Db.
As described above, the variation opening of the flow rate adjusting valve 22 is controlled in accordance with two kinds of predetermined opening degrees Da and Db depending upon whether the current flow rate Qo is greater than the predetermined flow rate Qb or not, and the driving speed of the flow rate adjusting valve 22 is controlled in the different manner when the current flow rate Qo is large and when the current flow rate Qo is small. According to this, it is possible to perform control suitable for properties of the flow rate adjusting valve 22, and it is possible to further shorten the overshooting time. The predetermined temperature Ty, the predetermined flow rate Qb, and the predetermined opening degrees Da and Db are one example, and the invention is not limited to the embodiment.

Next, an opening degree of the flow rate adjusting valve 22 when the hot water supply operation is stopped will be explained. First, since the heat exchanger hot water supply heat exchanger 18 keeps heat within predetermined time β (e.g., 10 minutes) after the hot water supply operation, the opening degree of the flow rate adjusting valve 22 at the time of completion of the hot water supply operation is maintained, and hot/cold water is supplied to the hot water supply terminal 17 at the same temperature as that at the time of the last time hot water supply operation when hot/cold water is again supplied from the hot water supply terminal 17.
However, after the predetermined time β after the hot water supply operation is completed, there is a possibility that the temperature of the hot water supply heat exchanger 18 is decreased or hot water in the hot water tank 7 is boiled. Therefore, there is a possibility that hunting of a temperature of hot/cold water supplied from the hot water supply heat exchanger 18 occurs when hot/cold water is supplied from the hot water supply terminal 17 next time, and high temperature hot/cold water is supplied to the hot water supply terminal 17.

An opening degree of the flow rate adjusting valve 22 after the hot water supply operation is completed will be explained.
It is determined whether an opening degree of the flow rate adjusting valve 22 when the hot water supply operation is completed after the predetermined time β after the hot water supply operation is completed is greater than a predetermined opening degree Ka. If the opening degree of the flow rate adjusting valve 22 is greater than the predetermined opening degree Ka, since there is a possibility that high temperature water is sent to the hot water supply terminal when the hot water supply operation is carried out next time, the opening degree of the flow rate adjusting valve 22 is driven to the predetermined opening degree Ka.
When the opening degree of the flow rate adjusting valve 22 is driven to the predetermined opening degree Ka, the opening degree is driven to the predetermined opening degree Ka after the flow rate adjusting valve 22 is fully closed and an original position is checked. By checking the original position, it is possible to keep the flow rate adjusting valve 22 with a precise opening degree, and it is possible to prevent high temperature water from being supplied to the hot water supply terminal 17 when the hot water supply operation is carried out next time.
If the opening degree of the flow rate adjusting valve 22 when the hot water supply operation is completed is smaller than the predetermined opening degree Ka, there is no possibility that high temperature water is sent to the hot water supply terminal when the hot water supply operation is carried out next time. Therefore, the opening degree of the flow rate adjusting valve 22 at the time of completion of the hot water supply operation is kept as it is to prepare for the next hot water supply operation.

As described above, by adjusting the opening degree of the flow rate adjusting valve 22 when the hot water supply operation is not carried out, it is possible to prevent high temperature water from being sent to the hot water supply terminal 17 when the hot water supply operation is carried out next time. The predetermined opening degree Ka is set to such a value that a temperature of hot/cold water to be supplied does not exceed a predetermined temperature irrespective of a flow rate of hot/cold water supplied from the hot water supply terminal 17, and the predetermined opening degree Ka can appropriately be changed in accordance with a system of a user. The predetermined time a and the predetermined time β are one example, and the invention is not limited to the embodiment.

Next, a casing of the heat pump hot water apparatus of the embodiment will be explained.

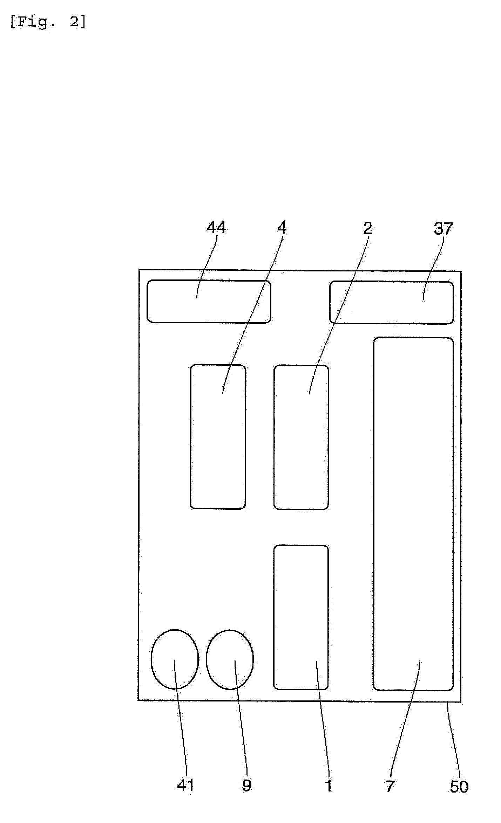

Fig. 2 is a diagram showing a schematic configuration of an essential portion of an interior of the heater as viewed from a front surface of the casing of the embodiment.
A longitudinally long cylindrical tank is used as the hot water tank 7.
The hot water tank 7 is disposed on one side of the casing 50 in its width direction, and the antifreeze liquid refrigerant heat exchanger 4, the compressor 1, the water/refrigerant heat exchanger 2, the water circulating means 9, and the antifreeze liquid circulating means 41 are disposed on the other sideof the casing 50 in its width direction. The compressor 1, the water circulating means 9, and the antifreeze liquid circulating means 41 are disposed at lower locations on the other sideof the casing 50 in the width direction, and the water/refrigerant heat exchanger 2 and the antifreeze liquid refrigerant heat exchanger 4 are disposed at the location higher than the compressor 1, water circulating means 9 and the antifreeze liquid circulating means 41.

The first expansion tank 37 is disposed at a location higher than the hot water tank 7. By disposing the first expansion tank 37 at the location higher than the hot water tank 7, it is possible to increase an amount of water which can be accommodated in the first expansion tank 37 with respect to an amount of water in the hot water tank circuit. It is preferable that the first expansion tank 37 is disposed in a space above the hot water thank 7. The first expansion tank 37 is covered with a heat insulator 38. Since high temperature water is introduced into the first expansion tank 37, heat efficiency can be enhanced by reducing influence of air flow caused and preventing heat radiation by the heat insulator.
The second expansion tank 44 is disposed at a location higher than the antifreeze liquid refrigerant heat exchanger 4. By disposing the second expansion tank 44 at the location higher than the antifreeze liquid refrigerant heat exchanger 4, it is possible to increase an adaptable antifreeze liquid amount in the second expansion tank 44 with respect to an antifreeze liquid amount in an antifreeze liquid circuit. It is preferable that the second expansion tank 44 is disposed in a space above the water/refrigerant heat exchanger 2 and the antifreeze liquid refrigerant heat exchanger 4. The second expansion tank 44 is covered with a heat insulator. Heat efficiency can be enhanced by preventing heat radiation of the second expansion tank 44 by the heat insulator.

In this embodiment, by driving the water circulating means 9, water in the hot water tank 7 is introduced directly into the water/refrigerant heat exchanger 2, hot water produced by the water/refrigerant heat exchanger 2 is returned to the hot water tank 7, thereby heating hot/cold water in the hot water tank 7, hot/cold water in the hot water tank 7 is introduced directly into the heating terminal 34 by driving the heating pump 35, hot water which dissipated heat at the heating terminal 34 is returned into the hot water tank 7. Alternatively, hot water produced by the water/refrigerant heat exchanger 2 may be introduced directly into the heating terminal 34, or water in the hot water tank 7 may be heated by hot water produced by the water/refrigerant heat exchanger 2.

According to the embodiment, in the one casing 50, the hot water tank 7 is disposed on one of sides of the casing 50, the antifreeze liquid circulating means 41 and the heat pump circuit are disposed on the other side of the casing 50, the water/refrigerant heat exchanger 2 is disposed at a location higher than the compressor 1, the heavy compressor 1 which largely vibrates is disposed on a bottom plate, and the water/refrigerant heat exchanger 2 is disposed above the compressor 1. According to this configuration, stability and noise-reduction effect can be realized when the heat pump hot water apparatus is installed, and the casing 50 can be made smaller in size by enhancing layout balance of functional parts in the casing 50.

### [Industrial Applicability]

The present invention provides a heat pump hot water apparatus especially suitable for cold area.

## Claims

1. A heat pump hot water apparatus comprising:
an antifreeze liquid circuit including antifreeze liquid circulating means which makes antifreeze liquid circulate, and an earth thermal heat exchanger which absorbs earth thermal by the antifreeze liquid;
a heat pump circuit including a compressor which compresses a refrigerant and discharges the same, a water/refrigerant heat exchanger which absorbs heat from the refrigerant discharged from the compressor to produce hot water, a decompressor which decompresses the refrigerant which dissipates heat in the water/refrigerant heat exchanger, and an antifreeze liquid refrigerant heat exchanger which absorbs heat from the antifreeze liquid by the refrigerant decompressed by the decompressor; and
a hot water tank in which hot water heated by the water/refrigerant heat exchanger is stored; in which
the antifreeze liquid circulating means, the heat pump circuit and the hot water tank are accommodated in one casing, wherein
the hot water tank is disposed on one of sides of the casing,
the antifreeze liquid circulating means and the heat pump circuit are disposed on the other side of the casing, and
the water/refrigerant heat exchanger is disposed at a location higher than the compressor,

2. The heat pump hot water apparatus according to claim 1, wherein the water/refrigerant heat exchanger and the antifreeze liquid refrigerant heat exchanger are disposed at locations higher than the compressor and the antifreeze liquid circulating means.

3. The heat pump hot water apparatus according to claim 1 or 2, further comprising a hermetic first expansion tank connected to the hot water tank, wherein
the first expansion tank is disposed at a location higher than the hot water tank.

4. The heat pump hot water apparatus according to claim 3, further comprising a hermetic second expansion tank connected to the antifreeze liquid circuit, wherein
the second expansion tank is disposed at a location higher than the antifreeze liquid refrigerant heat exchanger.

5. The heat pump hot water apparatus according to claim 4, wherein the first expansion tank is disposed on the one side of the casing, and the second expansion tank is disposed on the other side of the casing.
